# EUROPEAN PATENT APPLICATION

(11) **EP 2 175 392 A2**
(43) Date of publication of application: **14.04.2010**
(21) Application number: 09252353.9
(22) Date of filing: 02.10.2009
(51) Int. Cl.: G06F 21/00

(54) **Content transmitting method and apparatus**

(30) Priority: 03.10.2008 JP 2008257962
(71) Applicant: Hitachi Consumer Electronics Co., Ltd., Chiyoda-ku Tokyo (JP)
(72) Inventor: Teraoka, Hidetoshi, Tokyo 100-8220 (JP); Okamoto, Hiroo, Tokyo 100-8220 (JP)
(74) Representative: Hackney, Nigel John

(57) **Abstract**

A content transmitting method transmits content to a content receiving apparatus (100) connected via a network. Copy control information on content to be transmitted is transmitted immediately before the content, controlled by the copy control information, via the same application layer session as a packet different from a packet including the content.

## Description

### BACKGROUND OF THE INVENTION

The present invention relates to a transmitting apparatus, a receiving apparatus, and a contents transmitting method that are advantageously applicable to the protection of the copyright of transmitted contents when contents such as videos and audios are transmitted and received over a network.

When contents are transmitted between digital AV (audio visual) devices, the content transmitting apparatus encrypts the contents and shares decryption information with the content receiving apparatus. Sharing the decryption information in this way prevents devices other than the intended transmission destination from properly receiving and decrypting the contents, thus achieving copy protection against the creation of an unlimited number of copies.

An example of such a copy protection method employed by digital AV devices is described, for example, in JP-A-2007-104236. According to the system described in JP-A-2007-104236, contents are classified "copy free", "copy one generation", and "copy never" for management purposes. On a recording apparatus, only "copy free" and "copy one generation" contents are recorded and, after recorded once, "copy one generation" contents are treated as "no more copies". Before contents are transmitted over a wired or wireless network, the transmission side encrypts contents, except for "copy free" contents, to prevent contents from being copied an unlimited number of times. In this system, two methods for transmitting copy control information are disclosed; in one method, copy control information is inserted into contents and, in the other method, a part of copy control information is included in the header of transmission packets before those transmission packets are transmitted.

### SUMMARY OF THE INVENTION

In the prior art described above, copy control information on content to be copyright protected is included in the header of content transmission packets or in the content, or in both, before being transmitted.

Recently, however, contents are distributed in a way not anticipated in the past. That is, the user may copy contents a limited number of times or may subscribe to contents for a fixed period of time.

When such copy control information that is extended (hereinafter called extended copy control information) is added to contents to be copyright protected, the problem with the format defined by the system described above is that all copy control information may not be transmitted, for example, because the header size is limited.

It is an object of the present invention to provide a content transmitting apparatus, a content receiving apparatus, and a contents transmitting method that may transmit copy control information, including an allowable copy count or a subscription period, when contents are transmitted using a wired or wireless LAN.

To solve the above problem, there is provided a content transmitting method that transmits content to a content receiving apparatus connected via a network wherein before transmitting content controlled by copy control information, a packet including the copy control information is transmitted via the same application layer session as a packet different from a packet including the content.

The method described above allows extended copy control information, which includes a number of copies and a subscription period, to be transmitted when content is transmitted via a wired or wireless LAN.

Other objects, features and advantages of the invention will become apparent from the following description of the embodiments of the invention taken in conjunction with the accompanying drawings.

### BRIEF DESCRIPTION OF THE DRAWINGS

FIG. 1 is a diagram showing one configuration example of the system.
FIG. 2 is a diagram showing one configuration example of a content receiving apparatus.
FIG. 3 is a diagram showing one configuration example of a content transmitting apparatus.
FIG. 4 is a diagram showing one configuration example of a device information management portion.
FIG. 5 is a diagram showing one configuration example of a table of device information.
FIG. 6 is a diagram showing an example of the device authentication processing sequence executed between a content receiving apparatus and a content transmitting apparatus.
FIG. 7 is a diagram showing an example of the device authentication processing sequence for extended copy control information executed between a content receiving apparatus and a content transmitting apparatus.
FIG. 8A and 8B are diagrams showing the packet format when content is transmitted.
FIG. 9A and 9B are diagrams showing an example of the packet format when extended copy control information content is transmitted.
FIG. 10A and 10B are diagrams showing one configuration example of extended copy control information.
FIG. 11 is a diagram showing an example of the transmission data configuration when extended copy control information content is transmitted.
FIG. 12 is a diagram showing an example of the transfer processing sequence of extended copy control information content.
FIG. 13 is a diagram showing an example of the transmission data configuration when extended copy control information content is transmitted when copy control information is changed in the middle of the content.
FIG. 14 is a diagram showing an example of the transfer processing sequence of extended copy control information content when copy control information is changed in the middle of the content.

### DESCRIPTION OF THE EMBODIMENTS

Embodiments of the present invention will be described below.

### [First embodiment]

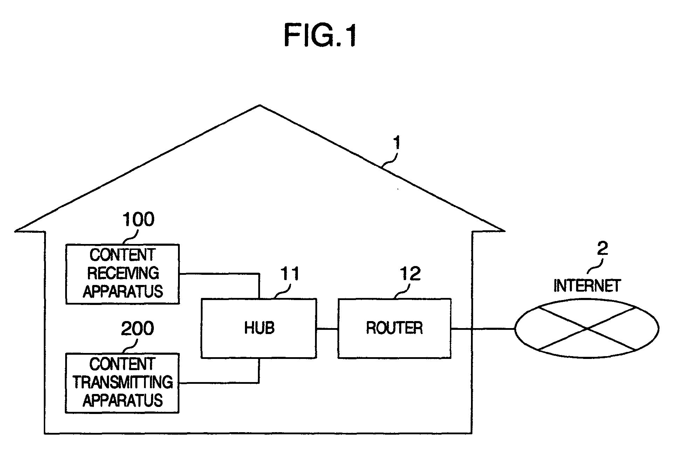

FIG. 1 is a diagram showing an example of the system configuration. In user's house 1, a content transmitting apparatus 200 and a content receiving apparatus 100 are connected to a network hub device 11, and the network hub device 11 is connected to a router 12, via a wired LAN cable. The router 12 is connected to the Internet 2 via a modem or a photoelectric converter.

In the LAN (Local Area Network), the standard IP (Internet Protocol) is used as the network protocol and TCP (Transmission Control Protocol) and UDP (User Datagram Protocol) are used as the higher-level transport protocol. For contents transmission, a still higher level application protocol, for example, RTP (Real-time Transport Protocol), HTTP (Hyper Text Transfer Protocol), or FTP (File Transfer Protocol) is used. Although there are different versions of IP, IPv4 and IPv6, the embodiment is not limited to any one of them.

The content transmitting apparatus 200, content receiving apparatus 100, and router 12 each have an IP address that identifies themselves on the LAN. A 48-bit MAC (Media Access Control) address is assigned to the interface portion of each of network communication processing circuits. To set an IP address on each device, DHCP (Dynamic Host Configuration Protocol) is used. For example, the router 12 acts as the DHCP server that assigns an IP address to each device.

When IPv6 (Internet Protocol Version 6) is used, each device may use a method, called stateless address autoconfiguration, to define its own IP address from the upper 64 bits of an IP address, notified from the router 12, and the MAC address.

Although the devices are connected via the wired LAN in the user's house 1 in FIG. 1, a LAN using wireless access points may also be used. In addition, the network hub device 11 and the router 12 may be integrated.

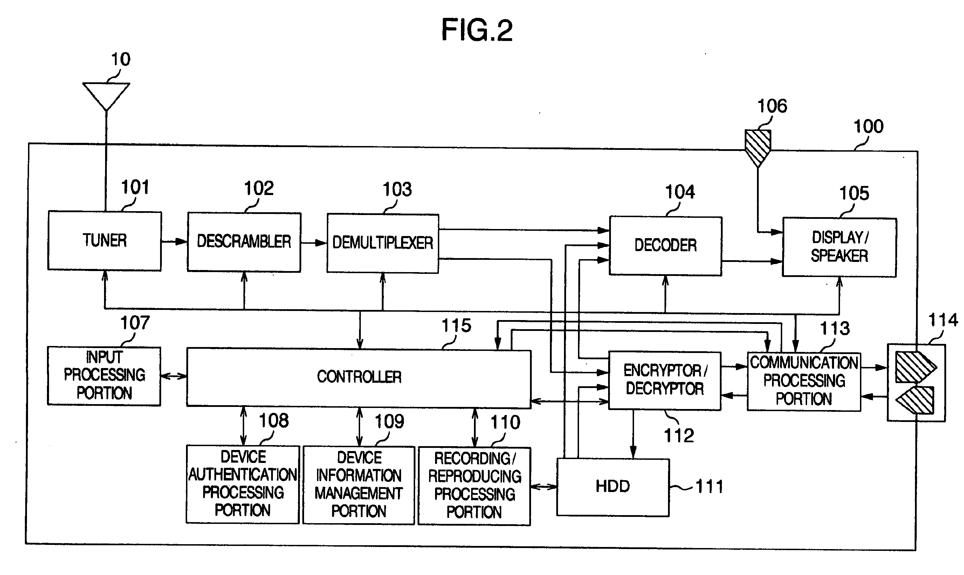

FIG. 2 is a diagram showing one configuration example of the content receiving apparatus 100.

The content receiving apparatus 100 comprises a tuner 101, a descrambler 102, a demultiplexer 103, a decoder 104, a display/speaker 105, a digital terminal 106, an input processing portion 107, a device authentication processing portion 108, a device information management portion 109, a recording/reproducing processing portion 110, an HDD (hard disc drive) 111, an encryptor/decryptor 112, a communication processing portion 113, a digital input/output terminal 114, and a controller 115.

The tuner 101 selects a desired channel from multiple channels received from a broadcast station via an antenna 10 and demodulates a digitally modulated program.

The descrambler 102 descrambles a program that is scrambled to receive only a channel for which subscription is contracted with a service operator.

The demultiplexer 103 extracts audio data and video data from a broadcast program.

The decoder 104 decodes compressed audio data and video data, received from a broadcast program or the digital input/output terminal 114, and decompresses the data into the original audio signals and video signals.

The display/speaker 105 reproduces the output signal from the decoder 104 or the signal entered from the digital terminal 106. The display/speaker 105 need not be installed internally but may be installed externally.

The digital terminal 106, for example, an HDMI (High-Definition Multimedia Interface), receives non-compressed digital data.

The input processing portion 107 is used by a user to operate the content receiving apparatus 100 via a remote control or a touch panel.

To transfer copyright-protected contents via the LAN, the device authentication processing portion 108 performs authentication for another AV device to authenticate each other that both apparatuses are properly authenticated according to a specific authentication protocol and generates a shared key for encrypting/decrypting the contents. The specific authentication protocol is, for example, the DTCP (Digital Transmission Content Protection) system.

The device information management portion 109 manages information on AV devices that have been successfully authenticated by the device authentication processing portion 108.

The recording/reproducing processing portion 110 controls the recording of contents on the HDD 111 and the reproduction of contents recorded on the HDD 111.

The HDD 111 is an internal memory in which broadcast programs are recorded. This memory may be a removable HDD, an optical disc, a memory card, or a hybrid mode memory created by combining them.

The encryptor/decryptor 112 encrypts or decrypts a broadcast program or contents, received from the LAN via the digital input/output terminal 114, using a shared key generated by the device authentication processing portion 108 and, at the same time, generates and analyzes packets to be transmitted to the network.

The communication processing portion 113 transmits and receives contents or control commands to and from other LAN-connected AV devices via the digital input/output terminal 114. The received contents include copy control information including an identification code, such as "copy free", "copy one generation", "copy never", and "no more copy" indicating the copy control method, as well as the number of copies or the subscription period.

The digital input/output terminal 114 receives and transmits contents and control commands via the LAN. The controller 115 integrally controls the operation of the components of the content receiving apparatus 100.

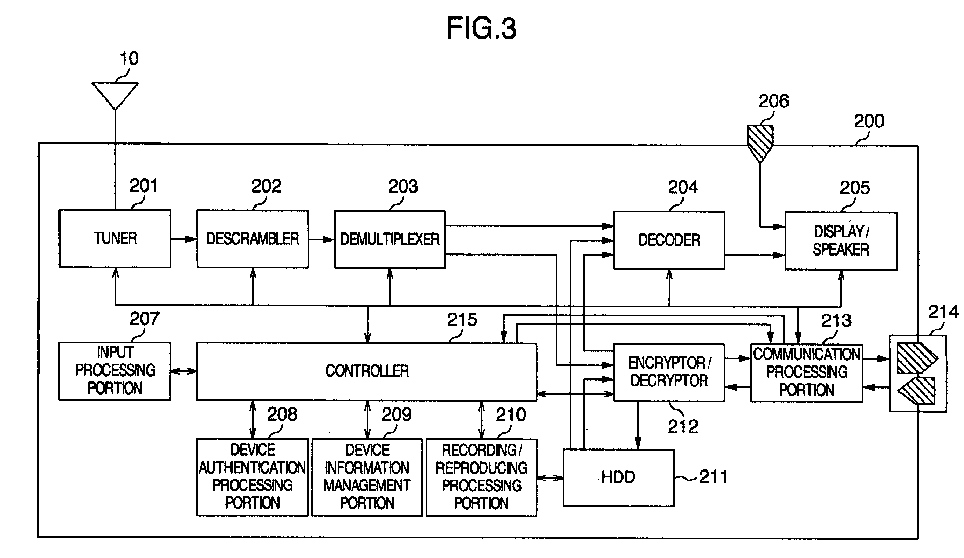

FIG. 3 is a diagram showing one configuration example of the content transmitting apparatus 200.

The content transmitting apparatus 200 comprises a tuner 201, a descrambler 202, a demultiplexer 203, a decoder 204, a display/speaker 205, a digital terminal 206, an input processing portion 207, a device authentication processing portion 208, a device information management portion 209, a recording/reproducing processing portion 210, an HDD 211, an encryptor/decryptor 212, a communication processing portion 213, a digital input/output terminal 214, and a controller 215.

The tuner 201 selects a desired channel from multiple channels received from a broadcast station via an antenna 20 and demodulates a digitally modulated program.

The descrambler 202 descrambles a program scrambled for receiving only a channel for which subscription is contracted with a service operator.

The demultiplexer 203 extracts audio data and video data from a broadcast program.

The decoder 204 decodes compressed audio data and video data, received from a broadcast program or the digital input/output terminal 214, and decompresses the data into the original audio signals and video signals.

The display/speaker 205 reproduces the output signal from the decoder 204 or the signal entered from the digital terminal 206. The display/speaker 205 need not be installed internally but may be installed externally.

The digital terminal 206, such as an HDMI, receives non-compressed digital data.

The input processing portion 207 is used by a user to operate the content transmitting apparatus 200 via a remote control or a touch panel.

To transfer copyright-protected contents via the LAN, the device authentication processing portion 208 performs authentication for another AV device to authenticate each other that both devices are properly authenticated according to a specific authentication protocol and generates a shared key for encrypting/decrypting the contents. The specific authentication protocol is, for example, the DTCP system.

The device information management portion 209 manages information on AV devices that have been successfully authenticated by the device authentication processing portion 208.

The recording/reproducing processing portion 210 controls the recording of contents on the HDD 211 and the reproduction of contents recorded on the HDD 211.

The HDD 211 is an internal memory in which broadcast programs are recorded. This memory may be a removable HDD, an optical disc, a memory card, or a hybrid mode memory created by combining them.

The encryptor/decryptor 212 encrypts or decrypts a broadcast program or contents, received from the LAN via the digital input/output terminal 214, using a shared key generated by the device authentication processing portion 208 and, at the same time, generates and analyzes packets to be transmitted to the network. The encryptor/decryptor may be called "a content processing portion".

The communication processing portion 213 transmits and receives contents or control commands to and from other LAN-connected AV devices via the digital input/output terminal 214. The transmitted contents include copy control information including an identification code, such as "copy-free", "copy one generation", "copy never", and "no more copies" indicating the copy control method, as well as the number of copies or the subscription period.

The digital input/output terminal 214 receives and transmits contents and control commands via the LAN. The controller 215 integrally controls the operation of the components of the content transmitting apparatus 200.

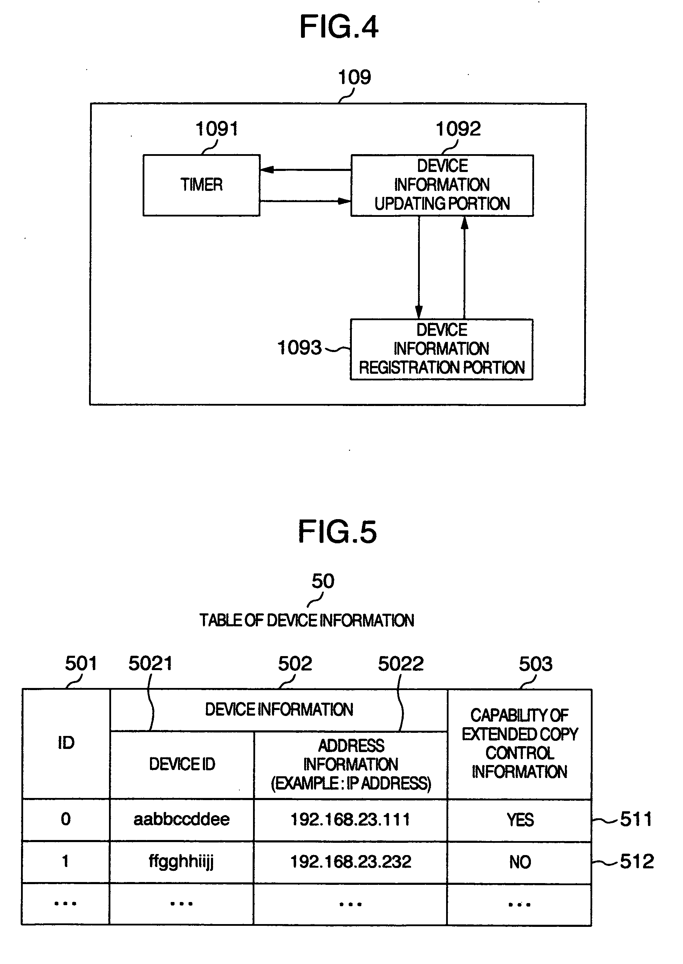

FIG. 4 is a diagram showing one configuration example of the device information management portion 109 (and 209) of each apparatus.

The device information management portion 109 comprises a timer 1091, a device information updating portion 1092, and a device information registration portion 1093.

The timer 1091 measures time when the device authentication processing portion 108 (and 208) checks if the other apparatus to be authenticated is in the house or when the device authentication processing portion 108 manages the expiration period of registration information stored in the device information registration portion 1093 that will be described later.

The device information updating portion 1092 manages the expiration period of registration information stored in the device information registration portion 1093 that will be described later and registers, updates, or deletes the information as necessary.

When the device authentication processing portion 108 has successfully authenticated an apparatus, information on the authenticated apparatus is stored in the device information registration portion 1093.

FIG. 5 is a diagram showing one configuration example of an table of device information 50 stored in the device information registration portion 1093.

The table of device information 50 comprises an ID 501, device information 502 including a device ID 5021 and address information 5022, and capability of extended copy control information 503.

The ID 501 indicates a registration number used in the table 50.

The device ID 5021 indicates an indicator for uniquely indicating each apparatus. For example, this indicator, such as a unique ID used by IEEE1394 connections or a device ID used by DTCP, is generated by a special certification organization. This indicator is apparatus-specific information saved in advance in non-volatile memory when each apparatus is manufactured and has a value unique to each apparatus. In addition, the indicator may include information such as a public key.

The address information 5022 indicates the IP address or the MAC address of each apparatus on the network.

The capability of extended copy control information indicates whether or not the device is capable of receiving extended copy control information.

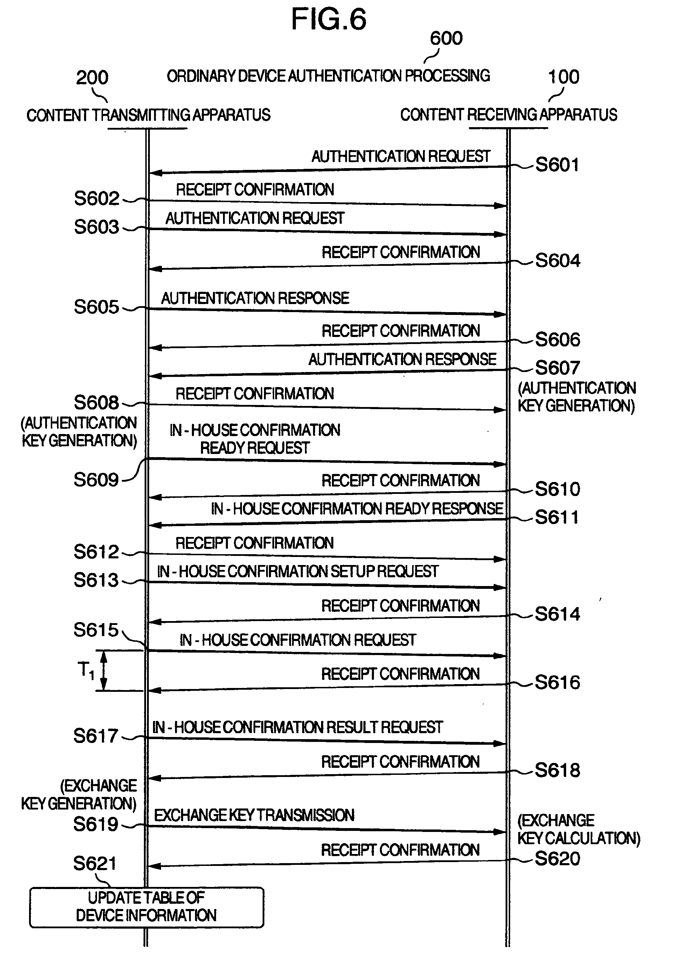

FIG. 6 is a diagram showing an example of a device authentication processing procedure 600 executed between the content transmitting apparatus 200 and the content receiving apparatus 100 in the system configuration shown in FIG. 1.

In this example, TCP is used as the protocol for transmitting and receiving information for device authentication processing. Whenever information is transmitted between the two apparatuses, for example, when an authentication request from one apparatus to the other apparatus is transmitted or an authentication response to that authentication request is transmitted, a receipt conformation is returned from the receiving-side apparatus and, after this receipt conformation is received, a communication path on which a transmission error may be detected is allocated.

Note that, in FIG. 6, the transmission and reception of data for establishing and discarding a connection via TCP are omitted.

First, the content receiving apparatus 100 creates an authentication request. The device authentication processing portion 108 of the content receiving apparatus 100 adds apparatus-unique information, including the device ID, and a certificate corresponding to the information to the authentication request and transmits the authentication request to the content transmitting apparatus 200 via the communication processing portion 113 (S601).

The device authentication processing portion 208 of the content transmitting apparatus 200 receives the authentication request via the communication processing portion 213 and transmits its receipt conformation to the content receiving apparatus 100 (S602). After that, the device authentication processing portion 208 of the content transmitting apparatus 200 creates an authentication request on its own side and, as the content receiving apparatus does, adds the unique information on the content transmitting apparatus 200 and its certificate to the authentication request and transmits the authentication request to the content receiving apparatus 100 (S603).

The device authentication processing portion 108 of the content receiving apparatus 100 receives the authentication request and transmits its receipt conformation to the content transmitting apparatus 200 (S604).

Next, the device authentication processing portion 208 of the content transmitting apparatus 200 verifies the information received via the authentication request and transmits an authentication response, to which parameters necessary for key information generation is added, to the content receiving apparatus 100 (S605).

The device authentication processing portion 108 of the content receiving apparatus 100 receives the authentication response and transmits its receipt conformation to the content transmitting apparatus 200 (S606). After that, the device authentication processing portion 108 of the content receiving apparatus 100 creates an authentication response on its own side and, as the content transmitting apparatus does, transmits the authentication response, to which the parameters required for key information generation is added, to the content transmitting apparatus 200 (S607), and generates an authentication key, which is common between the content receiving apparatus 100 and the content transmitting apparatus 200, using the required parameters.

The device authentication processing portion 208 of the content transmitting apparatus 200 receives the authentication response and transmits its receipt conformation to the content receiving apparatus 100 (S608). After that, as the content receiving apparatus does, the device authentication processing portion 208 of the content transmitting apparatus 200 generates an authentication key, which is common between the content receiving apparatus 100 and the content transmitting apparatus 200, using the required parameters.

As a result of the execution of the procedure described above, the common authentication key is generated and shared between the device authentication processing portion 208 of the content transmitting apparatus 200 and the device authentication processing portion 108 of the content receiving apparatus 100.

Next, to confirm if the content receiving apparatus 100 is an apparatus in the house, the content transmitting apparatus 200 transmits an in-house confirmation ready message to the content receiving apparatus 100 (S609).

The device authentication processing portion 108 of the content receiving apparatus 100 receives the in-house confirmation ready request and transmits its receipt conformation to the content transmitting apparatus 200 (S610), creates an in-house confirmation ready request on its own side, and transmits the created in-house confirmation ready request to the content transmitting apparatus 200 (S611).

The device authentication processing portion 208 of the content transmitting apparatus 200 receives the in-house confirmation ready request, transmits its receipt conformation to the content receiving apparatus 100 (S612), and transmits an in-house confirmation setup request, to which information required for in-house confirmation is added, to the content receiving apparatus 100 (S613).

The device authentication processing portion 108 of the content receiving apparatus 100 receives the in-house confirmation setting request, performs preparation required for in-house confirmation, and transmits its receipt conformation to the content transmitting apparatus 200 (S614).

The device authentication processing portion 208 of the content transmitting apparatus 200, which has received the receipt conformation, starts the timer 1091 in the device information management portion 209 and, after that, transmits an in-house confirmation request to the content receiving apparatus 100 to check if the content receiving apparatus 100 is in the house (S615).

The device authentication processing portion 108 of the content receiving apparatus 100 receives the in-house confirmation request and transmits its receipt conformation to the content transmitting apparatus 200 (S616).

In response to the receipt conformation, the device authentication processing portion 208 of the content transmitting apparatus 200 stops the timer 1091 and checks if the measured value (T1), from the time the in-house confirmation request was issued to the time the receipt conformation was received, does not exceed a predetermined time (T). If measurement value (T1) ≤ predetermined value (T), the content transmitting apparatus 200 judges that the content receiving apparatus 100 is in the house and is available in a range for personal use and transmits this information to the content receiving apparatus 100 as the in-house confirmation result (S617).

On the other hand, if measurement value (T1) > predetermined value (T), the content transmitting apparatus 200 judges that there is a possibility that the content receiving apparatus 100 is outside the house, interrupts the subsequent processing, and terminates the device authentication processing. The device authentication processing portion 108 of the content receiving apparatus 100, which has received the in-house confirmation result, transmits the receipt conformation to the content transmitting apparatus 200 (S618). In response to the receipt conformation, the device authentication processing portion 208 of the content transmitting apparatus 200 generates an exchange key to be used for encrypting the contents, encrypts the exchange key using the authentication key, and transmits the encrypted exchange key, as well as the ID identifying the exchange key, to the content receiving apparatus 100 (S619).

The device authentication processing portion 108 of the content receiving apparatus 100 uses the authentication key to decrypt the exchange key, transmitted from the content transmitting apparatus 200, and transmits the receipt conformation to the content transmitting apparatus 200 (S620).

In response to the receipt conformation, the device authentication processing portion 208 of the content transmitting apparatus 200 registers information on the content receiving apparatus 100 in the table of device information 50 in the device information management portion 209 (S621).

For example, as shown by a record 512 with the ID 501 in the table of device information 50, the device authentication processing portion 208 of the content transmitting apparatus 200 sets the device ID of the content receiving apparatus 100, received in S601, in the device ID 5021, sets the IP address of the content receiving apparatus 100, which is used on the network, in the address information 5022, and sets "NO" in the capability of extended copy control information 503.

As described above, the device authentication processing portion 208 of the content transmitting apparatus 200 and the device authentication processing portion 108 of the content receiving apparatus 100 share a common exchange key. The exchange key is used to generate a common key used for contents encryption/decryption. A known key-generation/key-exchange algorithm may be used to generate the authentication key, exchange key, and common key described above. The processing in S609 and S613 and the processing in S617 and S619 may be combined respectively.

The procedure described above includes the steps of the device authentication processing executed between the content transmitting apparatus 200 and the content receiving apparatus 100 when contents are transferred in the house.

The procedure described above, when executed, allows apparatuses to confirm each other that the apparatuses are properly authenticated and to share a key used for contents encryption/decryption.

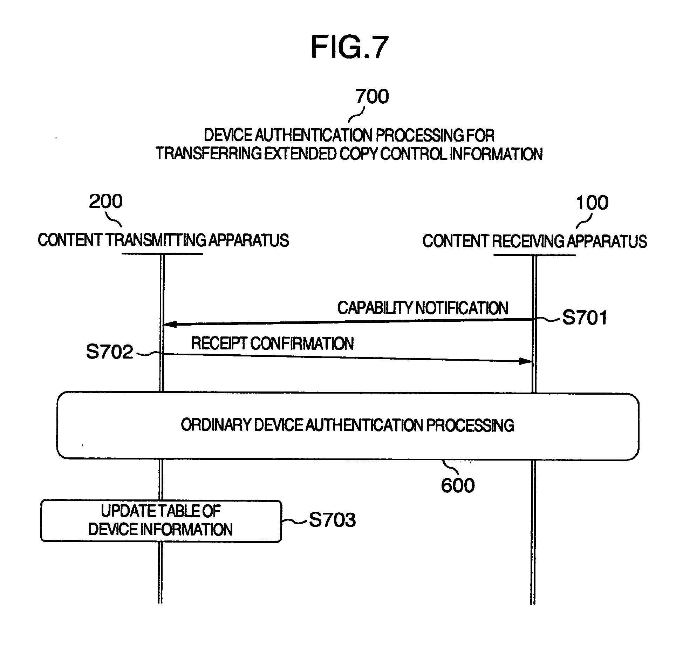

FIG. 7 is a diagram showing an example of a device authentication processing procedure specifically designed for processing extended copy control information and prepared for execution between the content transmitting apparatus 200 and the content receiving apparatus 100 in the system configuration shown in FIG. 1.

First, the device authentication processing portion 108 of the content receiving apparatus 100 transmits a capability notification, which indicates that this content receiving apparatus is able to receive extended copy control information, to the content transmitting apparatus 200 via the communication processing portion 113 (S701).

The device authentication processing portion 208 of the content transmitting apparatus 200 receives the capability notification via the communication processing portion 213 and sends the receipt conformation to the content receiving apparatus 100 to indicate that this content transmitting apparatus is able to transmit extended copy control information (S702).

Next, the content transmitting apparatus 200 and the content receiving apparatus 100 execute the device authentication processing 600 shown in FIG. 6.

When the device authentication processing 600 is completed, the device authentication processing portion 208 of the content transmitting apparatus 200 registers information on the content receiving apparatus 100 in the table of device information 50 in the device information management portion 209 (S703). For example, as shown in a record 511 with 0 in the ID 501 in the table of device information 50, the device authentication processing portion 208 of the content transmitting apparatus 200 sets the device ID of the content receiving apparatus 100, received in S601, in the device ID 5021, sets the IP address of the content receiving apparatus 100 on the network in the address information 5022, and sets "YES" in the capability of extended copy control information 503.

The procedure described above, when executed, allows the apparatuses to share a key to be used for contents encryption/decryption while confirming that the apparatuses are properly authenticated and at the same time checking if the apparatuses are receivable/transmittable extended copy control information.

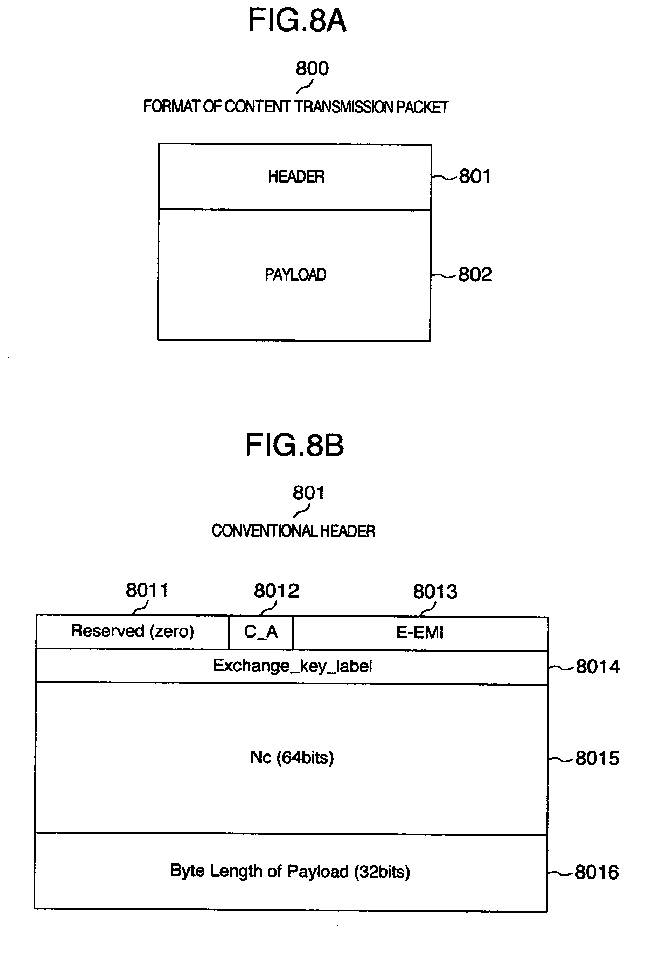

FIGs. 8A and 8B are diagrams showing an example of a content transmission packet format 800.

A content transmission packet is composed of a header 801 and a payload 802.

As shown in FIG. 8B, the header 801 comprises a reserved area (Reserved) 8011, an encryption method (C_A) 8012, an encryption mode (E-EMI) 8013, an exchange key label (Exchange_Key_Label) 8014, a nonce (Nc) 8015, and a payload size (Byte Length of Payload) 8016.

The reserved area (Reserved) 8011 is a reserved area, and 000 is set in this area.

The encryption method (C_A) 8012 indicates the encryption method of the payload. For example, this area indicates that the payload is encrypted using 128-bit key AES encryption.

The encryption mode (E-EMI) 8013 indicates the encryption mode of the payload. This area, combined with the nonce (Nc) 8015, is used for calculating a contents key.

A label that identifies a key exchanged by the device authentication processing procedure 600 is set in the exchange key label (Exchange_Key_Label) 8014.

The payload size of the packet is set in the payload size (Byte Length of Content) 8016.

The payload 802 contains encrypted contents.

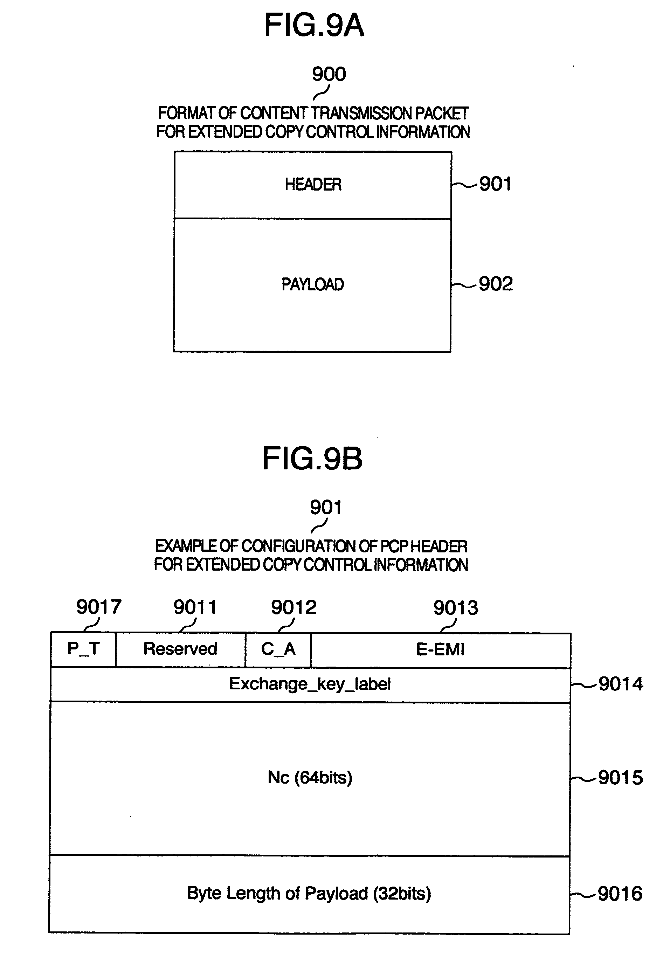

FIGs. 9A and 9B are diagrams showing an example of the header of a content transmission packet 900 extended for transmitting/receiving extended copy control information.

The content transmission packet 900 extended for transmitting/receiving extended copy control information is composed of a header 901 and a payload 902.

As shown in FIG.9B, a payload type (P_T) 9017 is an indicator identifying whether the payload is contents or extended copy control information. For example, "0" is set when the payload is contents, and "1" when the payload is extended copy control information.

A reserved area (Reserved) 9012 is a reserved area, and 00 is set in this area.

The other parts of the header are the same as those of the header of a conventional content transmission packet.

The payload 902 includes encrypted contents or encrypted extended copy control information.

When the payload 902 includes extended copy control information, the encryption mode (E-EMI) 9013 may or may not contain the same value that is set in the contents.

When this format is used, the payload 902 is encrypted using the exchange key and the contents key generated based on the encryption mode (E-EMI) 9013 and the nonce (Nc) 9015.

It is also possible to hash extended copy control information and to generate a contents encryption key by calculating the exclusive OR of the hashed value and the nonce (Nc) 9015 included in the header of the contents packet for establishing a correlation between the value of the extended copy control information and the contents key used to encrypt the contents. Establishing this correlation prevents the extended copy control information from being altered even if the extended copy control information is transmitted without being encrypted.

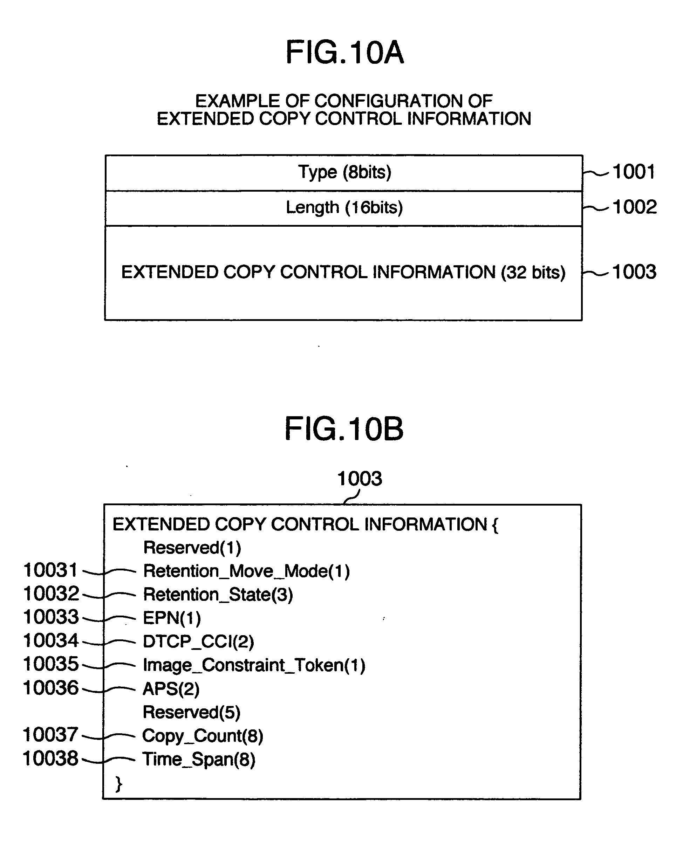

FIG. 10A and 10B are diagrams showing one configuration example of extended copy control information.

The extended copy control information is composed of Type 1001, Length 1002, and extended copy control information 1003.

Type 1001, an ID indicating the type of extended copy control information, is used to identify the format of the extended copy control information of the packet.

Length 1002 indicates the size of the extended copy control information included in the packet.

The extended copy control information 1003 is the copy control information on the contents. For example, as shown in FIG.10B, the extended copy control information 1003 is composed of Retention_Move_Mode 10031, Retention_State 10032, EPN 10033, DTCP_CCI 10034, Image_Constraint_Token 10035, APS 10036, Copy_Count 10037, and Time_Span 10038.

Retention_Move_Mode 10031 indicates whether the extended copy control information may be accumulated temporarily or not.

Retention_State 10032 indicates a temporary accumulation time.

EPN 10033 indicates whether the output protected copy operation is allowed unlimitedly or not.

DTCP_CCI 10034 indicates copy control information defined by the DTCP method.

Image_Constraint_Token 10035 indicates whether video output signals are limited or not.

APS 10036 indicates analog output copy control information.

Copy_Count 10037 indicates the number of permitted copies.

Time_Span 10038 indicates the permitted subscription period.

The first bit of the data of a packet used to transmit extended copy control information is used as an indicator indicating whether the packet is an extended copy control information packet or a content transmission packet. For example, the indicator is 1 when the packet contains extended copy control information. The format of the extended copy control information packet, if distinguishable from the format of the content transmission packet shown in FIG. 8, need not be the format similar to that of the content transmission packet shown in FIG. 9. For example, the header may be composed of Type 1001 and Length 1002 in the configuration example in FIG. 10, and the payload may be composed only of the extended copy control information 1003.

By transmitting extended copy control information in the format described above, copy control information, for example, not currently defined by the DTCP-IP method, may be transmitted easily in a format that does not depend on the contents format. This format allows the packet to be easily distinguished between a content transmission packet and an extended copy control information packet and, at the same time, copy control information to be added or changed easily.

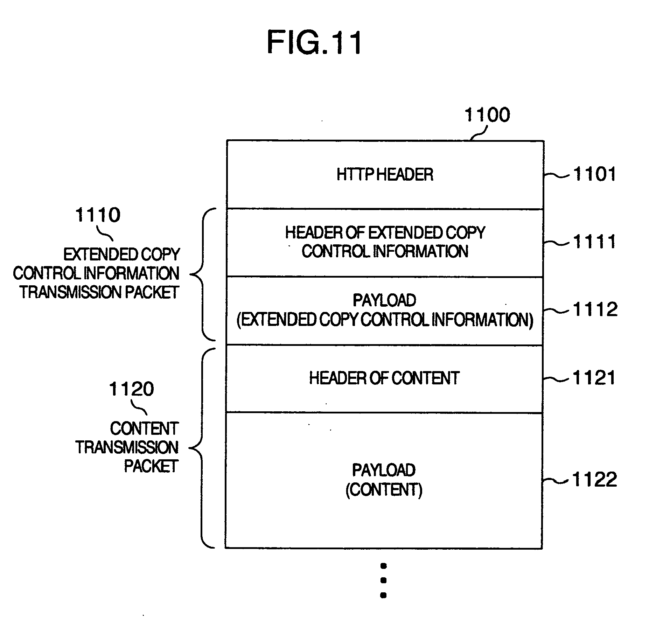

FIG. 11 is a diagram showing an example of data when contents are transmitted in the format shown in FIG. 9 using the HTTP protocol. In this example, though TCP is used as the transport layer protocol, the TCP header is omitted.

Transmission data 1100 that is transmitted using the formats shown in FIG. 9 and FIG. 10 is composed of an HTTP header 1101, an extended copy control information transmission packet 1110, and a content transmission packet 1120.

The extended copy control information transmission packet 1110 is composed of an extended copy control information header 1111 and a payload (extended copy control information) 1112.

The content transmission packet 1120 is composed of a contents header 1121 and a payload (contents) 1122.

The extended copy control information header 1111 is a header in which 1 is set in the payload type (P_T) 9017 in the header of the content transmission packet shown in FIG. 9.

The payload (extended copy control information) 1112 stores extended copy control information encrypted based on the exchange key, exchanged in device authentication processing 700 for transferring extended copy control information in FIG. 7, and on the information such as the encryption mode (E-EMI) 9013 and the nonce (Nc) 9015 stored in the extended copy control information header 1111.

The extended copy control information is not limited to the configuration example shown in FIG. 10 but may include information on multiple formats at the same time.

The extended copy control information transmission packet 1110 contains copy control information on the subsequent contents. This packet is inserted into transmission data at least each time the copy control information on the contents is changed.

The contents header 1121 is a header in which 0 is set in the payload type (P_T) in the header of the content transmission packet shown in FIG. 9.

The payload (contents) 1122 stores contents encrypted based on the exchange key, exchanged in device authentication processing 700 for transferring extended copy control information in FIG. 7, and on the information such as the encryption mode (E-EMI) 9013 and the nonce (Nc) 9015 stored in the contents header 1121.

Extended copy control information and contents in the format shown in FIG. 11, which are encrypted using the key generated based on the common exchange key, are transmitted in the same TCP and HTTP session. Doing so prevents the extended copy control information from being altered and, at the same time, uniquely associates the extended copy control information with the contents.

When contents are transmitted using the RTP protocol, the contents may also be transmitted in the same configuration as that shown in FIG. 11 by replacing the HTTP header 1101 with the RTP header. Alternatively, storing both the extended copy control information transmission packet 1110 and the content transmission packet 1120 in each RTP packet allows extended copy control information to be transmitted reliably.

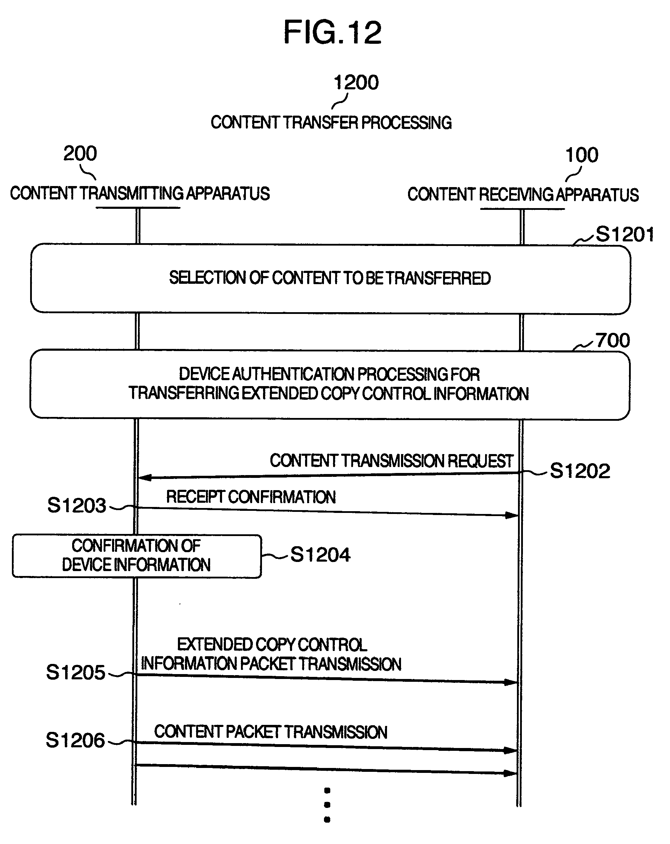

FIG. 12 is a diagram showing an example of the procedure for transferring contents that include a number of copies and a subscription period in the copy control information using the extended copy control information.

First, the content to be transferred between the content transmitting apparatus 200 and the content receiving apparatus 100 is determined (S1201). The procedures executed before contents selection include the procedure executed by the content receiving apparatus 100 for finding the content transmitting apparatus 200, the procedure executed by the content transmitting apparatus 200 for providing the contents, and the procedure executed by the content receiving apparatus 100 for selecting contents. To execute those procedures, the technology such as DLNA (Digital Living Network Alliance) may be used.

Next, the device authentication processing 700 for transferring extended copy control information described in FIG. 7 is executed between the content transmitting apparatus 200 and the content receiving apparatus 100. When the execution of the device authentication processing 700 for transferring the extended copy control information is completed, the controller 115 of the content receiving apparatus 100 issues a contents transfer request to the content transmitting apparatus 200 using the GET request of HTTP via the communication processing portion 113 (S1202).

If the requested content may be transferred, the controller 215 of the content transmitting apparatus 200 uses, for example, the response header of HTTP to transmit the receipt conformation to the content receiving apparatus to indicate that the contents may be transferred (S1203).

Next, the device information management portion 209 of the content transmitting apparatus 200 checks the table of device information 50 to confirm that "YES" is set in the capability of extended copy control information of the content receiving apparatus 100 that has issued the request (S1204). After that, the encryptor/decryptor 212 transmits the extended copy control information transmission packet (S1205) via the communication processing portion 213. This packet is composed of the header, in which the payload type 9017 in FIG. 9 shown in the formats in FIG. 9, FIG. 10, and FIG. 11 is set to 1 to indicate that the packet is an extended copy control information transmission packet, and the payload which includes the encrypted extended copy control information.

After that, the encryptor/decryptor 212 transmits the content transmission packet (S1206). This packet is composed of the header, in which the payload type 9017 in FIG. 9 in the formats shown in FIG. 9 and FIG. 11 is set to 0 to indicate that the packet is a content transmission packet, and the payload which includes the encrypted contents.

If the capability of extended copy control information of the content receiving apparatus 100 is "NO", the content is not transmitted or transmitted in the conventional format.

BY transmitting content using the procedure described above, content including extended copy control information may be transmitted only to an apparatus that may receive extended copy control information properly.

As described above, when content is transmitted via a wired or wireless LAN, copy control information including a number of copies and a subscription period may be transmitted.

### [Second embodiment]

In the first embodiment described above, copy control information is transmitted only immediately before content. In a second embodiment, copy control information is transmitted each time it is changed in the middle of content.

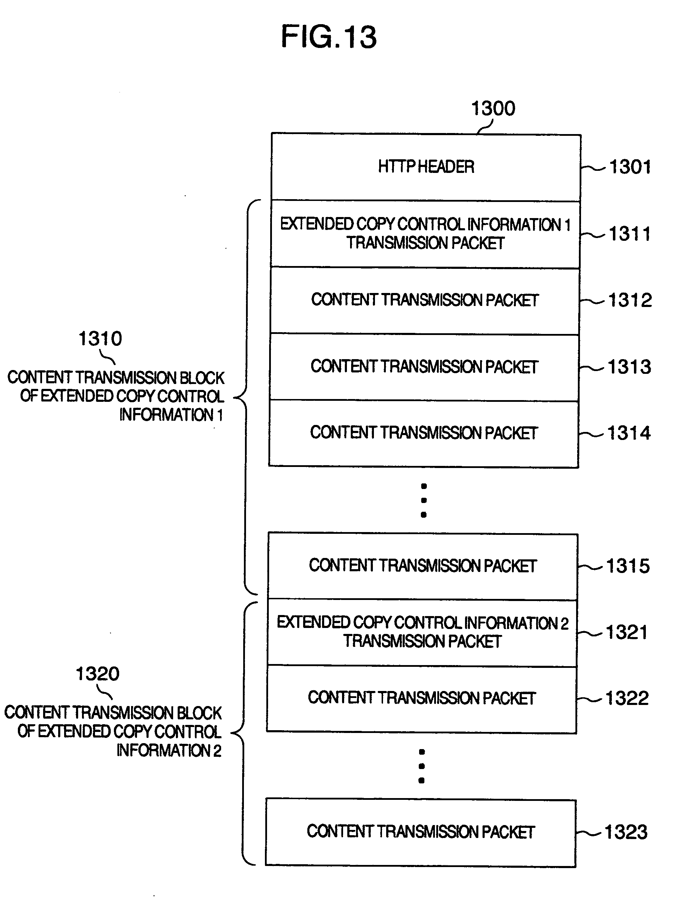

FIG. 13 is a diagram showing an example of transmission data in which copy control information is changed in the middle of the content. In this example, though the HTTP protocol is used as the application layer protocol and TCP is used as the transport layer protocol, the TCP header is omitted.

Transmission data 1300 is composed of an HTTP header 1301, a content transmission block 1310 under control of extended copy control information 1 and a content transmission block 1320 under control of extended copy control information 2.

The content transmission block 1310 under control of extended copy control information 1 is composed of an extended copy control information transmission packet 1311 and content transmission packets 1312-1315. The copy control of the content included in the content transmission packets 1312-1315 is under control of the copy control information transmitted by the extended copy control information transmission packet 1311.

The content transmission block 1320 under control of extended copy control information 2 is composed of an extended copy control information transmission packet 1321 and content transmission packets 1322-1323.

The copy control of the content included in the content transmission packets 1322-1323 is under control of the copy control information transmitted by the extended copy control information transmission packet 1321.

For content in which copy control information is changed multiple times, a block is added each time copy control information is changed, wherein each block is composed of an extended copy control information transmission packet used to transmit the changed copy control information and one or more content transmission packets used to transmit a content part under control of the changed copy control information.

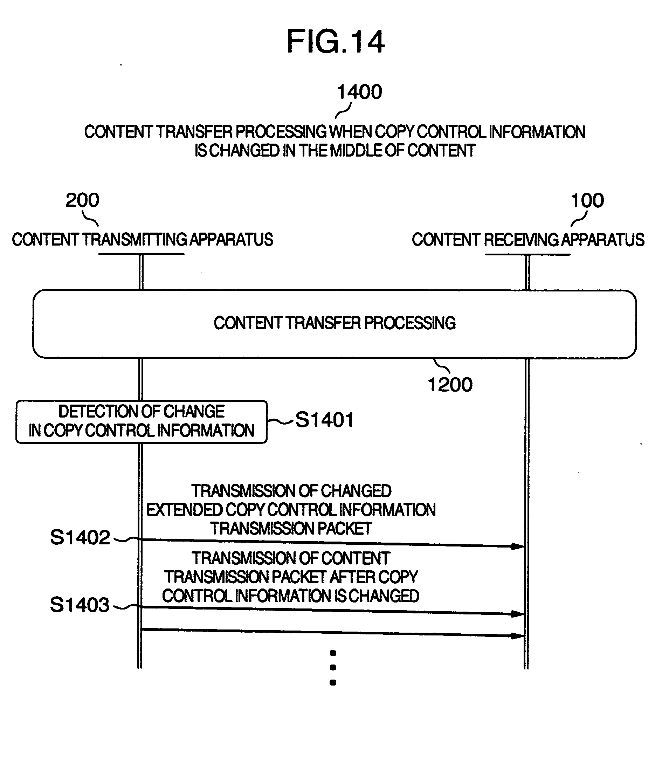

FIG. 14 is a diagram showing an example of a transfer procedure for transferring content, whose copy control information includes a number of copies and a subscription period, using extended copy control information wherein the copy control information is changed in the middle of the content.

The processing performed from the time the content to be transferred is selected to the time the transfer of the first copy control block of the content is started is the same as that in the ordinary content transfer processing 1200 shown in FIG. 12. In the content transmitting apparatus 200, when the controller 215 detects a change in the copy control information on the content to be transmitted (S1401), the encryptor/decryptor 212 first transmits an extended copy control information transmission packet. This packet is composed of the header, in which the payload type 9017 in FIG. 9 in the formats shown in FIG. 9, FIG. 10, and FIG. 11 is set to 1 to indicate that the packet is an extended copy control information transmission packet, and the payload which contains the encrypted, changed copy control information (S1402).

After this packet, the encryptor/decryptor 212 transmits a content transmission packet. This packet is composed of the header, in which the payload type 9017 in FIG. 9 in the formats shown in FIG. 9 and FIG. 11 is set to 0 to indicate that the packet is a content transmission packet, and a payload which contains encrypted content controlled by the changed copy control information (S1403). When the copy control information is changed multiple times in the content, the procedure steps S1401 to S1403 are repeated each time the copy control information is changed.

Transmitting content using the transmission data format shown in FIG. 13 and according to the procedure shown in FIG. 14 allows copy control information to be transmitted reliably even if the copy control information is changed in the middle of the content, thus making it possible to perform copy control according to a change in the copy control information.

As described above, when content is transmitted via a wired or wireless LAN, copy control information including a number of copies and a subscription period may be transmitted even if the copy control information is changed in the middle of the content.

It should be further understood by those skilled in the art that although the foregoing description has been made on embodiments of the invention, the invention is not limited thereto and various changes and modifications may be made without departing from the spirit of the invention and the scope of the appended claims.

## Claims

1. A content transmitting apparatus (200) that transmits content, which includes copy control information, to a content receiving apparatus (100) connected to the content transmitting apparatus (200) via a network, the content transmitting apparatus comprising:
a content processing portion (212) that generates a plurality of packets configuring the content to be copy-controlled by copy control information;
a communication processing portion (213) that transmits the packets via said network; and
a controller (215) that controls said content processing portion (212) and said communication processing portion (213) for transmitting the plurality of packets configuring the content in one session, wherein
said content processing portion (212) generates a packet configuring the copy control information as a packet different from the plurality of packets configuring the content and
said controller (215) controls said content processing portion (212) and said communication processing portion (213) so that the packet configuring the copy control information is transmitted before transmitting the plurality of packets configuring the content in the same session as a session in which the content is transmitted.

2. The content transmitting apparatus (200) according to claim 1, wherein the packet configuring the copy control information comprises a header, which has an indicator indicating that the packet is different from the plurality of packets configuring the content, and a payload which stores the copy control information.

3. The content transmitting apparatus (200) according to claim 1, wherein said content processing portion (212) encrypts the copy control information and the content by using a key generated based on an exchange key exchanged between said content receiving apparatus (100) and said content transmitting apparatus (200).

4. A content transmitting method that transmits content, which includes copy control information, from a content transmitting apparatus to a content receiving apparatus (100) connected to the content transmitting apparatus via a network, the method comprising the steps of:
generating a plurality of packets configuring the content to be copy-controlled by copy control information;
generating a packet configuring the copy control information as a packet different from the plurality of packets configuring the content; and
transmitting the packet configuring the copy control information before transmitting the plurality of packets configuring the content in the same session as a session in which the content is transmitted.

5. The content transmitting method according to claim 4, wherein the packet configuring the copy control information comprises a header, which has an indicator indicating that the packet is different from the plurality of packets configuring the content, and a payload which stores the copy control information.

6. The content transmitting method according to claim 4, wherein the copy control information and the content are encrypted by using a key generated based on an exchange key exchanged between said content receiving apparatus (100) and said content transmitting apparatus (200), before being transmitted.
